# EUROPEAN PATENT APPLICATION

(11) **EP 4 803 667 A1**
(43) Date of publication of application: **09.09.2026**
(21) Application number: 25210397.3
(22) Date of filing: 22.10.2025
(51) Int. Cl.: C25B 9/70, C25B 1/04, C25B 9/60, C25B 9/63, C25B 9/65, C25B 9/75, C25B 9/77, C25B 11/036, C25B 15/08

(54) **ELECTROLYZER AND METHOD FOR MANUFACTURING THE SAME, AND ELECTROLYZER MODULE**

(30) Priority: 07.03.2025 CN 202510270849
(71) Applicant: Envision Energy Technology Pte Ltd., 079903 Singapore (SG)
(72) Inventor: ZHANG, Yue, 079903 Singapore (SG); LEI, Yunxiang, 079903 Singapore (SG); LI, Guoliang, 079903 Singapore (SG); ZHANG, Huayong, 079903 Singapore (SG); ZHANG, Jian, 079903 Singapore (SG); WANG, Weiqian, 079903 Singapore (SG); LIU, Zidong, 079903 Singapore (SG); CHENG, Rui, 079903 Singapore (SG); WANG, Shuguo, 079903 Singapore (SG); LIU, Haibiao, 079903 Singapore (SG)
(74) Representative: Balder IP Law, S.L.

(57) **Abstract**

An electrolyzer, a method for manufacturing the electrolyzer, and an electrolyzer module are provided, relating to the field of electrolyzers. The electrolyzer includes: a frame defining an inner cavity and including a top frame, a bottom frame, a first frame, and a second frame; a bipolar plate connected to the frame and dividing the inner cavity into an anode chamber and a cathode chamber; a first collection frame, located within the anode chamber and fixed to an end of the bipolar plate near the top frame, and defining a first cavity together with the bipolar plate; an anode mesh, located on a side of the first collection frame away from the bipolar plate; a second collection frame, located within the cathode chamber and fixed to an end of the bipolar plate near the top frame, and defining a second cavity together with the bipolar plate; a cathode mesh, located on a side of the second collection frame away from the bipolar plate. The first frame and the second frame each have a hollow chamber. One of the first frame and the second frame has a first discharge port formed on an inner wall facing the anode chamber, and the other of the first frame and the second frame has a second discharge port formed on an inner wall facing the cathode chamber, the first discharge port being in communication with the first cavity, and the second discharge port being in communication with the second cavity. This is at least advantageous in improving electrolysis efficiency of the electrolyzer.

## Description

### TECHNICAL FIELD

The present application relates to the field of electrolyzers, and in particular to an electrolyzer, a method for manufacturing the electrolyzer, and an electrolyzer module.

### BACKGROUND

Before the concept of green hydrogen was established, the electrolyzer industry was already relatively mature. Compared with other supply chains of the hydrogen energy, the electrolyzer industry has a more well-developed supply chain and has achieved commercialization. In the future, the key technological development directions of the electrolyzer industry will focus on reducing power consumption, improving the electrolysis efficiency of individual cells, increasing the current density of individual cells, extending the service life of electrolyzers, and achieving modular integration. An electrolyzer device typically comprises dozens to hundreds of bipolar plates connected in series. The design of the bipolar plate structure plays a crucial role throughout the entire lifecycle of the electrolyzer, including manufacturing, installation, and operation.

However, with the continuous development of the renewable energy-based hydrogen production industry, there is an increasing demand for scaling up electrolyzer devices. Simply stacking small electrolysis chambers may result in an excessive overall length of the electrolyzer, which is unfavorable for assembly and installation. Moreover, such configurations may lead to concerns such as mid-section sagging of the electrolyzer. In addition, the gas-liquid mixture produced in the electrolyzer needs to be discharged to an external collection device, which is detrimental to achieving a high level of integration for the electrolyzer device and also hampers the reduction of its manufacturing cost.

### SUMMARY

Embodiments of the present application provide a secondary battery, a method for manufacturing the secondary battery, an energy storage system, and an electrical device, which are at least advantageous in solving the problem of thermal runaway in secondary batteries.

An electrolyzer is provided according to some embodiments of the present application. The electrolyzer includes: a frame defining an inner cavity, the frame including a top frame and a bottom frame opposite to each other in a first direction, and a first frame and a second frame opposite to each other in a second direction; a bipolar plate connected to the frame, the bipolar plate dividing the inner cavity into an anode chamber and a cathode chamber in a third direction; a first collection frame, located within the anode chamber and fixed to an end of the bipolar plate adjacent to the top frame, and the first collection frame and the bipolar plate defining a first cavity; an anode mesh, located on a side of the first collection frame away from the bipolar plate; a second collection frame, located within the cathode chamber and fixed to an end of the bipolar plate adjacent to the top frame, and the second collection frame and the bipolar plate defining a second cavity; and a cathode mesh, located on a side of the second collection frame away from the bipolar plate. Each of the first frame and the second frame has a hollow chamber, and one of the first frame and the second frame has a first discharge port formed on an inner wall facing the anode chamber, and the other of the first frame and the second frame has a second discharge port formed on an inner wall facing the cathode chamber, the first discharge port being in communication with the first cavity, and the second discharge port being in communication with the second cavity.

A method for manufacturing an electrolyzer is also provided according to some embodiments of the present application. The method includes: providing a frame defining an inner cavity, the frame including a top frame and a bottom frame opposite to each other in a first direction, and a first frame and a second frame opposite to each other in a second direction; providing a bipolar plate, welding four sides of the bipolar plate to the top frame, the first frame, the bottom frame, and the second frame, respectively, to divide the inner cavity into an anode chamber and a cathode chamber in a third direction, and the bipolar plate including a first side defining the anode chamber and a second side defining the cathode chamber; providing a first collection frame, fixing the first collection frame to an end of the first side adjacent to the top frame, and the first collection frame and the bipolar plate defining a first cavity; providing a second collection frame, fixing the second collection frame to an end of the second side adjacent to the top frame, and the second collection frame and the bipolar plate defining a second cavity; providing an anode mesh, arranging the anode mesh on a side of the first collection frame away from the bipolar plate; and providing a cathode mesh, arranging the cathode mesh on a side of the second collection frame away from the bipolar plate. Each of the first frame and the second frame has a hollow chamber, and one of the first frame and the second frame has a first discharge port formed on an inner wall facing the anode chamber, and the other of the first frame and the second frame has a second discharge port formed on an inner wall facing the cathode chamber, the first discharge port being in communication with the first cavity, and the second discharge port being in communication with the second cavity.

An electrolyzer module is also provided according to some embodiments of the present application. The electrolyzer module includes multiple electrolyzers as provided in the foregoing or multiple electrolyzers manufactured by the method described in the foregoing, an electrolysis bath, and a power supply unit. The electrolysis bath contains an electrolyte, the cathode mesh and the anode mesh in each of the multiple electrolyzers are immersed in the electrolyte. The power supply unit is electrically connected to the cathode mesh and the anode mesh, for supplying electrical power to the multiple electrolyzers.

The technical solutions provided in the embodiments of the present application have at least the following advantages.

The anode chamber and the cathode chamber each are provided with a collection frame, which facilitate gas-liquid phase separation and overflow within the anode and cathode chambers, as well as the collection of gas-liquid mixtures generated in the electrolyzer. On one hand, the anode mesh is located on the side of the first collection frame away from the bipolar plate, which allows the first collection frame to increase the reaction area of the electrolyte within the anode chamber, i.e., to enlarge the electrolysis area, without increasing the overall volume of the anode chamber. This contributes to improving the current density and electrolysis efficiency in the anode chamber. On the other hand, the cathode mesh is located on the side of the second collection frame away from the bipolar plate, which similarly allows the second collection frame to enlarge the electrolysis area in the cathode chamber without increasing its volume, thereby improving the current density and electrolysis efficiency in the cathode chamber. Through the combined effect of both aspects, the electrolysis area within the limited physical space of the electrolyzer can be effectively increased, thereby enhancing the electrolysis efficiency of the electrolyzer.

In addition, both a first frame and a second frame are designed to have hollow chambers, with a first discharge port and a second discharge port respectively formed on the two hollow chambers. The first discharge port is in communication with the first hollow chamber, and the second discharge port is in communication with the second hollow chamber. One of the first frame and the second frame serves as a collection device for the gas-liquid two-phase mixture generated in the anode chamber, and the other serves as a collection device for the gas-liquid two-phase mixture generated in the cathode chamber. This configuration facilitates full utilization of the physical space occupied by the first and second frames, thereby improving the integration density of the electrolyzer without additionally increasing the overall volume of the electrolyzer and without requiring separate collection devices, which in turn is conducive to reducing the manufacturing cost of the electrolyzer. Furthermore, the first discharge port and the second discharge port are defined adjacent to the top edge of the bipolar plate, which helps improve the efficiency of gas and liquid discharge. The design of the first and second collection frames also helps prevent significant backflow of the electrolyte.

### BRIEF DESCRIPTION OF THE DRAWINGS

One or more embodiments are illustrated with reference to the figures in the corresponding drawings. These illustrations are not intended to limit the embodiments. The drawings are not intended to impose proportional limitations, unless specifically stated otherwise. To better explain the technical solutions of the embodiments or conventional art, the following provides a brief introduction to the drawings used in the embodiments. It is evident that the drawings in the following description are only some of the embodiments of the present disclosure. For those skilled in the art, other drawings can be derived from these, without any inventive efforts.
FIG. 1 is a perspective view of a combination of a frame and a bipolar plate in an electrolyzer according to an embodiment of the present application;
FIG. 2 is a partial perspective view of an electrolyzer including a first collection frame and a second collection frame according to an embodiment of the present application;
FIG. 3 is another partial perspective view of a combination of a frame and a bipolar plate in an electrolyzer according to an embodiment of the present application;
FIG. 4 is a partial cross-sectional view of an electrolyzer according to an embodiment of the present application;
FIG. 5 is a partial perspective view of an electrolyzer according to an embodiment of the present application;
FIG. 6 is a partial cross-sectional view of a combination of a second frame and a bipolar plate in an electrolyzer according to an embodiment of the present application;
FIG. 7 is a partial cross-sectional view of a combination of a first frame and a bipolar plate in an electrolyzer according to an embodiment of the present application; and
FIG. 8 is a partial cross-sectional view of a combination of a first collection frame, a second collection frame, and a bipolar plate in an electrolyzer according to an embodiment of the present application.

### DETAILED DESCRIPTION OF THE EMBODIMENTS

It is known from the background section that the electrolysis efficiency of electrolyzers is desired to be improved, and the integration level of the electrolyzers also requires enhancement.

This application provides an electrolyzer, a method for manufacturing the electrolyzer, and an electrolyzer module. On the one hand, an anode mesh in the electrolyzer is located on one side of a first collection frame away from the bipolar plate, which helps improve current density and electrolysis efficiency in the anode chamber with the aid of the first collection frame, without additionally increasing the volume of the anode chamber. On the other hand, the cathode mesh in the electrolyzer is located on one side of a second collection frame away from the bipolar plate, which helps improve current density and electrolysis efficiency in the cathode chamber with the aid of the second collection frame, without additionally increasing the volume of the cathode chamber. The combined effect of these two aspects helps effectively improve the electrolysis efficiency of the electrolyzer within the limited physical space of the electrolyzer. Additionally, one of the first and second frames serves as the collection device for the gas-liquid two-phase mixture generated in the anode chamber and the other serves as the collection device for the gas-liquid two-phase mixture generated in the cathode chamber, which is advantageous to fully utilize the physical space occupied by the first and second frames without increasing the volume of the electrode chamber. This helps enhance the integration density of the electrolyzer without separate collection devices, thus reducing the manufacturing cost of the electrolyzer. Furthermore, the first discharge port and the second discharge port are defined at one end of the bipolar plate adjacent to the top frame, which helps improve the efficiency of gas and liquid discharge. The design of the first and second collection frames also helps prevent significant backflow of the electrolyte.

In the description of the embodiments of the present application, the technical terms "first", "second", and the like are used only to distinguish between distinct objects and should not be interpreted as indicating or implying relative importance or the quantity, specific order, or hierarchy of the technical features referred to. In the description of the embodiments of the present application, the term "plurality" means two or more, unless explicitly stated otherwise.

The term "embodiment" herein means that the specific features, structures, or characteristics described in connection with an embodiment can be included in at least one embodiment of the present application. The occurrence of the phrase "embodiment" at various locations in the specification does not necessarily refer to the same embodiment, nor is it intended to refer to independent or alternative embodiments that are mutually exclusive of other embodiments. Those skilled in the art will explicitly and implicitly understand that the embodiments described herein can be combined with other embodiments.

In the description of the embodiments of the present application, the term "and/or" is used merely to describe the relationship between associated objects, indicating that three relationships may exist, for example, A and/or B, which can mean that A exists, both A and B exist, or B exists. Additionally, the character "/" generally indicates an "or" relationship between the associated objects.

In the description of the embodiments of the present application, the term "multiple" refers to two or more (inclusive of two). Similarly, the term "multiple sets" refers to two or more sets (inclusive of two sets), and the term "multiple pieces" refers to two or more pieces (inclusive of two pieces).

In the description of the embodiments of the present application, the technical terms "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like refer to directional or positional relationships based on the orientation or position shown in the accompanying drawings, and are used merely for convenience in describing the embodiments of the present application and simplifying the description. These terms are not intended to indicate or imply that the device or component referred to must have a specific orientation, or be constructed or operated in a specific orientation, and therefore should not be construed as limiting the embodiments of the present application.

In the description of the embodiments of the present application, unless otherwise specifically provided or defined, the technical terms "install," "connected," "coupled," "fixed," and similar terms should be broadly interpreted. For example, they can refer to fixed connections, detachable connections, or integrally formed connections; mechanical connections, electrical connections; direct connections, or indirect connections via an intermediate medium; or communication between two elements or interactions between two elements. A person of ordinary skill in the art may understand the specific meaning of these terms in the context of the embodiments of the present application based on the particular circumstances.

In the drawings corresponding to the embodiments of the present application, the thickness and area of the layers are enlarged for better understanding and convenience in description. When describing a component (such as a layer, film, region, or substrate) on another component or on the surface of another component, the component can be "directly" located on the surface of the other component, or a third component can be interposed between the two components. Conversely, when describing a component as being on the surface of another component, or a component having another component formed or disposed on its surface, it indicates that there is no third component between the two components. Moreover, when describing a component as being "substantially" formed on another component, it means that the component is not formed on the entire surface (or front surface) of the other component, nor is it formed on the partial edge of the entire surface.

In the description of the embodiments of the present application, when a component "comprises" another component, unless otherwise stated, it does not exclude other components, and such additional components may also be included. Furthermore, when a layer, film, region, or plate is said to be "on" or "located on" another component, it can be "directly on" the surface of the other component (i.e., with no other components in between), or there may be another component interposed between them. Additionally, when a layer, film, region, or plate is "directly on" another component, or when a layer, film, region, or plate is located on the surface of another component, it indicates that no other components are between them.

The terms used in the description of various embodiments of the present application are merely for describing specific embodiments and are not intended to limit the scope. As used in the description of the various embodiments and the claims, the term "said part" is also intended to include the plural form unless explicitly indicated otherwise in context. The components include elements such as layers, films, regions, or plates.

The following detailed description of the embodiments of the present application will be given in conjunction with the drawings. However, a person of ordinary skill in the art will understand that many technical details have been included in the embodiments for the sake of helping the reader better understand the application. Nevertheless, even without these technical details and various modifications and variations based on the following embodiments, the technical solutions claimed in this application can still be implemented.

An electrolyzer is provided according to an embodiment of the present application. The following detailed description of the electrolyzer provided in the embodiment of the present application will be made with reference to the accompanying drawings.

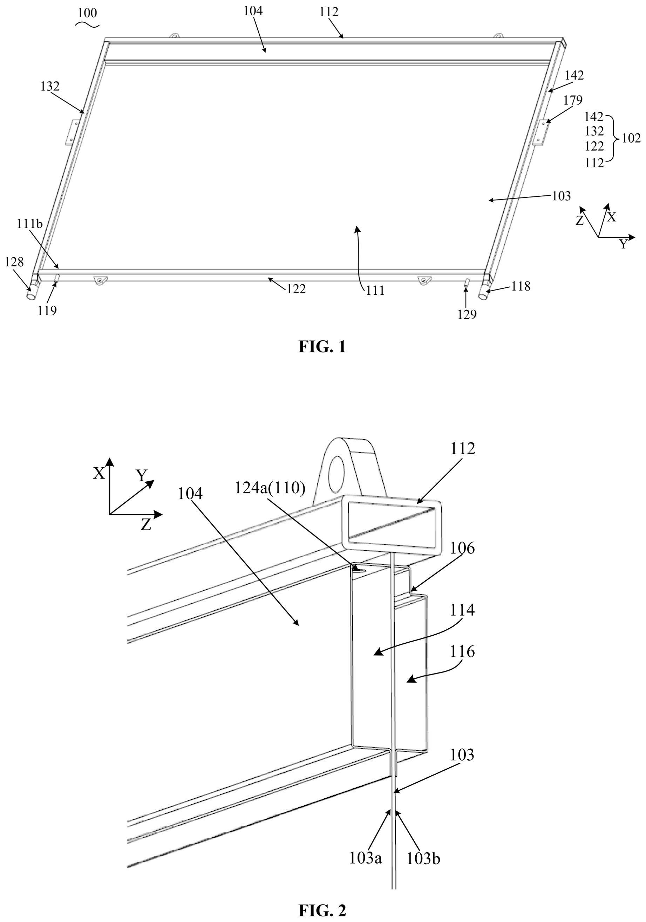

With reference to FIG. 1 to FIG. 7, the electrolyzer 100 comprises: a frame 102 that defines an inner cavity 101, where the frame 102 includes a top frame 112 and a bottom frame 122 that are opposite in a first direction X, as well as a first frame 132 and a second frame 142 that are opposite in a second direction Y; a bipolar plate 103 connected to the frame 102, which divides the inner cavity 101 into an anode chamber 111 and a cathode chamber 121 along a third direction Z; a first collection frame 104 located within the anode chamber 111 and fixed at one end of the bipolar plate 103 adjacent to the top frame 112, the first collection frame 104 and the bipolar plate 103 defining a first cavity 114; an anode mesh 105 located on one side of the first collection frame 104 away from the bipolar plate 103; a second collection frame 106 located within the cathode chamber 121 and fixed at one end of the bipolar plate 103 adjacent to the top frame 112, the second collection frame 106 and the bipolar plate 103 defining a second cavity 116; a cathode mesh 107 located on one side of the second collection frame 106 away from the bipolar plate 103. Both the first frame 132 and the second frame 142 have hollow chambers, with one of the first frame 132 and the second frame 142 being provided with a first discharge port 111a on its inner wall facing the anode chamber 111, and the other being provided with a second discharge port 121a on its inner wall facing the cathode chamber 121. The first discharge port 111a communicates with the first cavity 114, and the second discharge port 121a communicates with the second cavity 116.

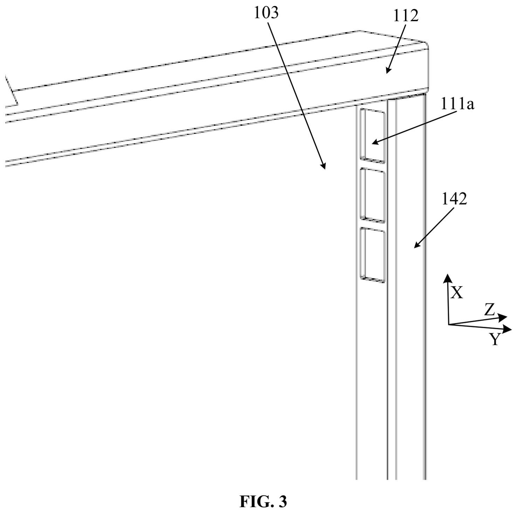

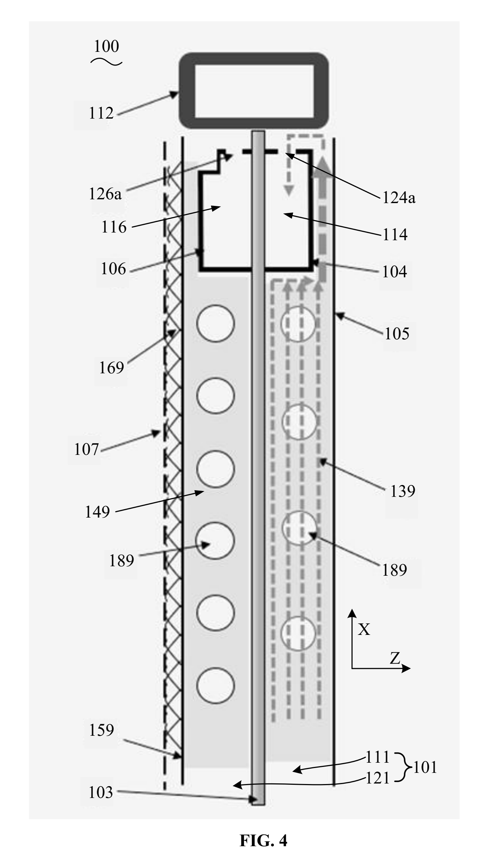

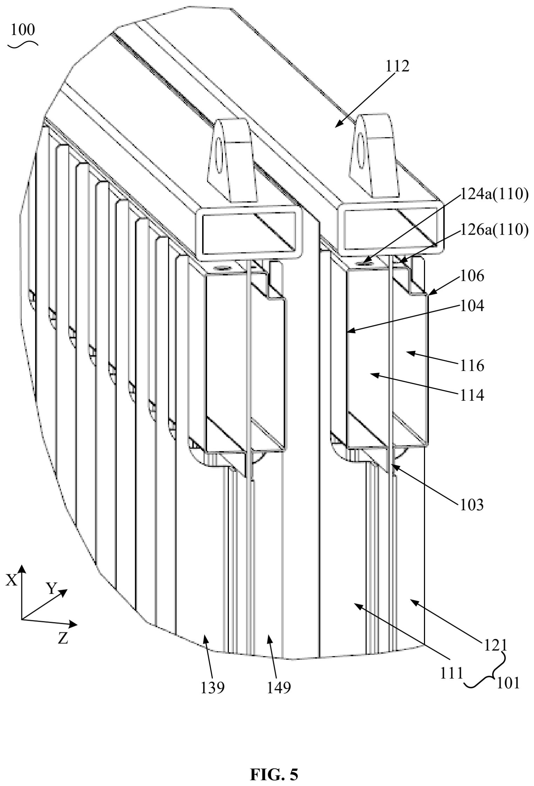

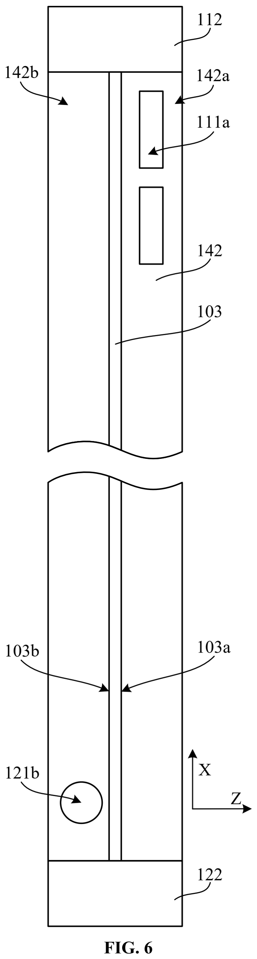

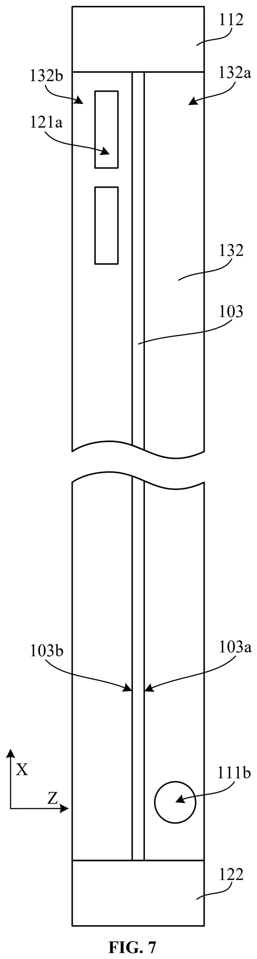

It should be noted that FIG. 1 is a perspective view of a combination of a frame and a bipolar plate in an electrolyzer according to an embodiment of the present application. FIG. 2 is a partial perspective view of an electrolyzer including a first collection frame and a second collection frame according to an embodiment of the present application. FIG. 3 is another partial perspective view of a combination of a frame and a bipolar plate in an electrolyzer according to an embodiment of the present application. FIG. 4 is a partial cross-sectional view of an electrolyzer according to an embodiment of the present application. FIG. 5 is a partial perspective view of an electrolyzer according to an embodiment of the present application. FIG. 6 is a partial cross-sectional view of a combination of a second frame and a bipolar plate in an electrolyzer according to an embodiment of the present application. FIG. 7 is a partial cross-sectional view of a combination of a first frame and a bipolar plate in an electrolyzer according to an embodiment of the present application. In addition, the first direction X is a height direction of the electrolyzer 100, the second direction Y is a length direction of the electrolyzer 100, and the third direction Z is a width direction of the electrolyzer 100.

It is worth noting that, in the case where the anode chamber 111 and cathode chamber 121 share the same bipolar plate 103, both the anode chamber 111 and the cathode chamber 121 are provided with respective collection frames, which helps facilitate the separation and overflow of the gas-liquid two-phase mixture within the anode and cathode chambers, as well as the collection of the gas-liquid two-phase mixture generated by the electrolyzer. Specifically, the anode chamber 111 is provided with a first collection frame 104 fixed at one end of the bipolar plate 103 adjacent to the top frame 112, and the cathode chamber 121 is provided with a second collection frame 106 fixed at the end of the bipolar plate 103 adjacent to the top frame 112.

Moreover, on the one hand, the anode mesh 105 is located on the side of the first collection frame 104 away from the bipolar plate 103. In other words, the first collection frame 104 is positioned between the bipolar plate 103 and the anode mesh 105. In the powered state, current flows between the anode mesh 105 and the first collection frame 104. The reaction area of the electrolyte in the anode chamber 111 can be increased by providing the first collection frame 104 in the anode chamber 111, without additionally increasing the volume of the anode chamber 111. That is, the electrolysis area in the anode chamber 111 is increased, which in turn helps to improve the current density and electrolysis efficiency within the anode chamber 111. On the other hand, the cathode mesh 107 is located on the side of the second collection frame 106 away from the bipolar plate 103. In other words, the second collection frame 106 is positioned between the bipolar plate 103 and the cathode mesh 107. In the powered state, current flows between the cathode mesh 107 and the second collection frame 106. The reaction area of the electrolyte in the cathode chamber 121 can be increased by providing the second collection frame 106 in the cathode chamber 121, without additionally increasing the volume of the cathode chamber 121. That is, the electrolysis area in the cathode chamber 121 is increased, which in turn helps to improve the current density and electrolysis efficiency within the cathode chamber 121. The combined effect of these two aspects is beneficial for effectively increasing the electrolysis area of the electrolyzer 100 within its limited physical space, thereby enhancing the electrolysis efficiency of the electrolyzer 100.

In addition, the first frame 132 and second frame 142 both are designed to include hollow chambers, with a first discharge port 111a and a second discharge port 121a provided on the two hollow chambers, respectively. The first discharge port 111a communicates with the first cavity 114. The second discharge port 121a communicates with the second cavity 116. In other words, the first collection frame 104 and the second collection frame 106 have no sealing edges along the second direction Y, allowing them to communicate with the first discharge port 111a and second discharge port 121a, respectively. Thus, one of the first and second frames 132 and 142 serves as the collection device for the gas-liquid two-phase mixture generated in the anode chamber 111 and the other serves as the collection device for the gas-liquid two-phase mixture generated in the cathode chamber 121, fully utilizing the physical space occupied by the first and second frames 132 and 142 without additionally increasing the volume of the electrolyzer 100. This helps enhance the integration density of the electrolyzer 100 without separate collection devices, thereby reducing the manufacturing cost of the electrolyzer 100. Furthermore, the first discharge port 111a and second discharge port 121a are respectively defined at the locations corresponding to the first collection frame 104 and second collection frame 106, i.e., at one end of the bipolar plate 103 adjacent to the top frame 112, which helps improve the efficiency of gas and liquid discharge. The design of the first collection frame 104 and the second collection frame 106 also helps prevent significant backflow of the electrolyte.

It is worth emphasizing that the electrolyzer 100 according to the embodiments of the present application may be a water electrolysis hydrogen production electrolyzer, a low-pressure electrolyzer, a square electrolyzer, an alkaline water electrolyzer or the like.

It should be noted that in FIG. 4, the approximate flow path of the gas-liquid mixture in the anode chamber 111 is schematically shown by several dashed lines with arrows. Similarly, the approximate flow path of the gas-liquid mixture in the cathode chamber 121 is also schematically shown by several dashed lines with arrows. In addition, in FIG. 3, the number of first discharge ports 111a is shown as 3 for example. In FIG. 6, the number of first discharge ports 111a is shown as 2 for example. In practical applications, the number of first discharge ports 111a is not limited and can be adapted to specific needs. Similarly, in practical applications, the number of second discharge ports 121a is also not limited and can be adjusted adapted to specific needs.

The following provides a detailed description of the electrolyzer 100 according to the embodiments of the present application.

In some embodiments, a ratio of a volume of the second cavity 116 to a volume of the first cavity 114 is in the range of 1 to 2. For example, the ratio of the volume of the second cavity 116 to the volume of the first cavity 114 can be 1.1, 1.2, 1.3, 1.4, 1.5, 1.6, 1.7, 1.8, or 1.9, etc.

It is worth noting that, in some cases, the electrolyzer 100 is used for water electrolysis to produce hydrogen. The anode chamber 111 is used to generate oxygen, with most of the oxygen and a small amount of electrolyte collecting in the first collection frame 104, i.e., in the first cavity 114. The cathode chamber 121 is used to generate hydrogen, with most of the hydrogen and a small amount of electrolyte collecting in the second collection frame 106, i.e., in the second cavity 116. In a given unit of time, the amount of hydrogen produced in the cathode chamber 121 is twice the amount of oxygen produced in the anode chamber 111. Based on this, the design of the ratio of the volume of the second cavity 116 to the volume of the first cavity 114 being between 1 and 2 helps reduce the pressure difference between the second cavity 116 and the first cavity 114, effectively preventing the pressure difference between the anode chamber 111 and cathode chamber 121 from being too large, which could affect other components in the electrolyzer 100, such as the stability of the membrane. This, in turn, helps improve the overall structural stability of the electrolyzer 100.

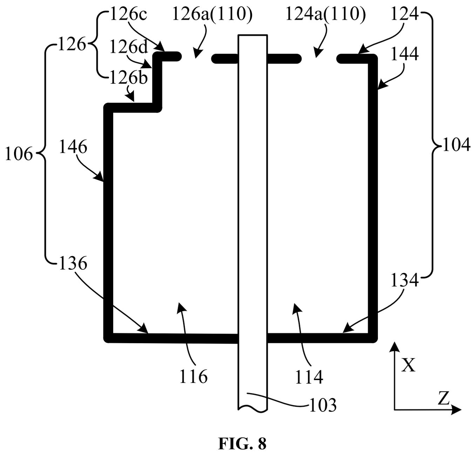

In some embodiments, with reference to FIG. 8, which is a partial cross-sectional view of the combination of the first collection frame, the second collection frame, and the bipolar plate in the electrolyzer according to the embodiments of the present application. At least one of the first collection frame 104 and the second collection frame 106 includes a top plate and a bottom plate that are opposite in the first direction X, as well as a side plate connecting the top plate and bottom plate at their ends away from the bipolar plate 103. A reflux hole 110 is defined on the top plate.

It should be noted that, in order to distinguish between the first collection frame 104 and the second collection frame 106, in the following description, the top plate, the bottom plate, and the side plate of the first collection frame 104 will be referred to as the first top plate 124, the first bottom plate 134, and the first side plate 144, respectively. The top plate, the bottom plate, and the side plate of the second collection frame 106 will be referred to as the second top plate 126, the second bottom plate 136, and the second side plate 146, respectively. Accordingly, the reflux hole 110 includes a first reflux hole 124a formed on the first top plate 124 and a second reflux hole 126a formed on the second top plate 126.

It should be noted that, when the electrolyzer 100 is powered, the electrolyte in the anode chamber 111 and the cathode chamber 121 will bubble to generate gas. When rising to the first collection frame 104 or the second collection frame 106, the gas will carry a small amount of electrolyte. This small amount of electrolyte will flow into the first collection frame 104 or the second collection frame 106 through the reflux hole 110 to separate the gas phase from the liquid phase. For example, the electrolyte carried by the oxygen as it rises to the first collection frame 104 will flow into the first collection frame 104 through the first reflux hole 124a, and the electrolyte carried by the hydrogen as it rises to the second collection frame 106 will flow into the second collection frame 106 through the second reflux hole 126a.

In other embodiments, at least one of the first collection frame and the second collection frame includes a bottom plate and a side plate located on the side of the bottom plate adjacent to the top frame. The bottom plate, the side plate, and the bipolar plate together form a cavity with an opening facing the top frame. That is, in a direction perpendicular to the second direction, at least one of the first collection frame and the second collection frame has a cross-section similar to an L-shape. In other words, at least one of the first collection frame and the second collection frame is not designed with a top plate, and the electrolyte, when bubbling, flows over the side plate and into the first or second collection frame.

It should be noted that, as illustrated in FIG. 8, both the first collection frame 104 and the second collection frame 106 are provided, by way of example, with a top plate, a bottom plate, and a side plate, and reflux holes 110 are formed on the respective top plates. In other words, the cross-sections of the first collection frame 104 and the second collection frame 106, in a plane perpendicular to the second direction Y, are both generally U-shaped. In practical applications, in some cases, only one of the first collection frame and the second collection frame is provided with a top plate, a bottom plate, and a side plate, with a reflux hole formed on the top plate, while the other may have a different structural form, such as a collection frame having an opening facing the top frame. In other cases, the first collection frame and the second collection frame each are a collection frame having an opening facing the top frame. In addition, in FIG. 8, the general outlines of the first collection frame 104 and the second collection frame 106 are schematically indicated by thicker solid lines.

The specific structure of the second collection frame 106 is described in detail below.

In some embodiments, referring to FIG. 8, the second collection frame 106 includes a second top plate 126 and a second bottom plate 136 that are opposite to each other in the first direction X, as well as a second side plate 146 that connects the ends, away from the bipolar plate 103, of the second top plate 126 and the second bottom plate 136. A second reflux hole 126a is formed on the second top plate 126.

In some cases, with reference to FIG. 4 and FIG. 8, the second top plate 126 includes a first sub-plate 126b and second sub-plate 126c that is separated from the first sub-plate 126b, and a bent plate 126d connecting the first sub-plate 126b and the second sub-plate 126c. In the first direction X, a distance between the first sub-plate 126b and the top frame 112 is greater than a distance between the second sub-plate 126c and the top frame 112. In the third direction Z, a distance between the bent plate 126d and the cathode mesh 107 is greater than a distance between the second side plate 146 and the cathode mesh 107. The second reflux hole 126a is located on the second sub-plate 126c. In other words, as shown in FIG. 4, FIG. 5, or FIG. 8, the second collection frame 106 may be partially recessed inward at its upper left corner.

This allows other components, such as the cathode mesh 107, to be installed in the cathode chamber 121 by utilizing the offset made available by the second sub-plate 126c and the bent plate 126d, thereby further improving the space utilization within the cathode chamber 121.

In other cases, the second top plate may be slanted relative to a plane, which is considered as a reference plane, defined by the second direction and the third direction. In this case, the end of the second top plate connected to the bipolar plate is positioned higher than the end of the second top plate connected to the second side plate. Such a slanted second top plate can also reserve installation space within the cathode chamber for other components, such as the cathode mesh, thereby maximizing the space utilization within the cathode chamber.

In some examples, an angle at which the second top plate is slanted relative to the reference plane may range from 0° to 30°. For example, the angle may be 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, or 29°.

In other embodiments, at least one of the first collection frame and the second collection frame may have a square cross-section in a plane perpendicular to the second direction.

In some embodiments, an opening of the reflux hole 110 may be circular, elliptical, triangular, square, rhombic, or an N-sided polygon, where N is a positive integer greater than or equal to 5. It should be noted that in FIG. 2, the opening of the reflux hole 110 is shown as circular merely by way of example. In practical applications, the present application imposes no particular restrictions on the shape of the opening of the reflux hole 110 formed on the top plate, and is applicable to various common shapes. Furthermore, the present application imposes no particular limitations on the number of reflux holes 110, the spacing between adjacent reflux holes 110, or whether the openings of different reflux holes have an identical shape. These parameters can be flexibly adjusted to suit practical requirements.

In some cases, with reference to FIG. 2, FIG. 4, or FIG. 8, the first top plate 124 of the first collection frame 104 is provided with a first reflux hole 124a, and the second top plate 126 of the second collection frame 106 is provided with a second reflux hole 126a. It should be noted that in these cases, the openings of the first reflux hole 124a and the second reflux hole 126a may have the same or different shape, the number of the first reflux hole 124a may be equal to or different from the number of the second reflux hole 126a, and the spacing between adjacent first reflux holes 124a may be equal to or different from the spacing between adjacent second reflux holes 126a.

In some embodiments, with reference to FIG. 4 to FIG. 7, there is spacing between the first collection frame 104 and the top frame 112. In the first direction X, a minimum distance between the first collection frame 104 and the top frame 112 is referred to as a first distance, and a minimum distance between the first discharge port 111a and the top frame 112 is referred to as a second distance, with the first distance being smaller than the second distance. This allows the portion of the first top plate 124 of the first collection frame 104 that is in contact with the bipolar plate 103 to be positioned above the first discharge port 111a. In other words, the first collection frame 104 can be considered to cover the first discharge port 111a. A small amount of electrolyte and generated gas in the anode chamber 111 will rise over the first top plate 124, then enter the first collection frame 104 through the first reflux hole 124a and be discharged through the first discharge port 111a into the first frame 132 or the second frame 142. This helps ensure that the electrolyte surges along the entire length of the first collection frame 104 in the first direction X. As a result, the anode mesh 105 and the separator can be arranged on the side of the first collection frame 104 away from the bipolar plate 103, ensuring that the electrolyte properly wets the anode mesh 105 and separator in this section. This also increases the length of anode mesh 105 and the separator that can be arranged per unit height within the anode chamber 111, thereby increasing the electrolysis area and current density per unit volume in the anode chamber 111.

In some embodiments, with reference to FIG. 4 to FIG. 7, there is spacing between the second collection frame 106 and the top frame 112. In the first direction X, a minimum distance between the second collection frame 106 and the top frame 112 is referred to as a third distance, and a minimum distance between the second discharge port 121a and the top frame 112 is referred to as a fourth distance, with the third distance being smaller than the fourth distance. This allows the portion of the second top plate 126 of the second collection frame 106 that is in contact with the bipolar plate 103 to be positioned above the second discharge port 121a. In other words, the second collection frame 106 can be considered to cover the second discharge port 121a. A small amount of electrolyte and generated gas in the cathode chamber 121 will rise over the second top plate 126, then enter the second collection frame 106 through the second reflux hole 126a and be discharged through the second discharge port 121a into the first frame 132 or the second frame 142. This helps ensure that the electrolyte surges along the entire length of the second collection frame 106 in the first direction X. As a result, the cathode mesh 107 and the separator can be arranged on the side of the second collection frame 106 away from the bipolar plate 103, ensuring that the electrolyte properly wets the cathode mesh 107 and diaphragm in this section. This also increases the length of cathode mesh 107 and the separator that can be arranged per unit height within the cathode chamber 121, thereby increasing the electrolysis area and current density per unit volume in the cathode chamber 121.

It should be noted that, in some cases, the first collection frame 104 covers the first discharge port 111a, and the second collection frame 106 covers the second discharge port 121a. In practical applications, however, the design can be adapted according to actual requirements. For example, the first collection frame covers the first discharge port while the second collection frame covers only part of the second discharge port. Alternatively, the second collection frame covers the second discharge port while the first collection frame covers only part of the first discharge port.

In some embodiments, with reference to FIG. 2, a distance between the part, that is closest to the top frame 112, of at least one of the first collection frame 104 and the second collection frame 106 and the top frame 112 may range from 0.5 cm to 2.5 cm. In other words, at least one of the first distance and the third distance may range from 0.5 cm to 2.5 cm. For example, at least one of the first distance and the third distance may be 0.6 cm, 0.7 cm, 0.8 cm, 0.9 cm, 1.0 cm, 1.1 cm, 1.2 cm, 1.3 cm, 1.4 cm, 1.5 cm, 1.6 cm, 1.7 cm, 1.8 cm, 1.9 cm, 2.0 cm, 2.1 cm, 2.2 cm, 2.3 cm, or 2.4 cm.

In some embodiments, with reference to FIG. 4 and FIG. 8, at least one of the first collection frame 104 and the second collection frame 106 may include a top plate and a bottom plate that are opposite to each other in the first direction X, and a side plate connecting the top plate and the bottom plate at their ends away from the bipolar plate 103. The electrolyzer 100 may further include a reinforcement rib (not shown), located in at least one of the first cavity 114 and the second cavity 116, with the reinforcement rib being connected at least to the bottom plate and the side plate.

In some cases, with reference to FIG. 8, the first collection frame 104 includes a first top plate 124 and a first bottom plate 134 that are opposite to each other in the first direction X, and a first side plate 144 connecting the first top plate 124 and the first bottom plate 134 at their ends away from the bipolar plate 103. The reinforcement rib can be considered as a first reinforcement rib connected to the first bottom plate 134 and the first side plate 144. The second collection frame 106 includes a second top plate 126 and a second bottom plate 136 that are opposite to each other along the first direction X, and a second side plate 146 connecting the second top plate 126 and the second bottom plate 136 at their ends away from the bipolar plate 103. The reinforcement rib can be considered as a second reinforcement rib connected to the second bottom plate 136 and the second side plate 146.

It should be noted that, in some cases, the first collection frame and the second collection frame each may include a reinforcement rib, that is, a first reinforcement rib that supports the first collection frame and a second reinforcement rib that supports the second collection frame, by way of example. In practical applications, however, only the first collection frame is provided with a reinforcement rib, which is connected to at least the bottom plate and the side plate of the first collection frame. Alternatively, only the second collection frame is provided with a reinforcement rib, which is connected to at least the bottom plate and the side plate of the second collection frame.

In some cases, the cross-section of the reinforcement rib, in a plane perpendicular to the second direction Y, may be triangular, trapezoidal, or the like. In some examples, the reinforcement rib has a triangular cross-section and is connected to both the bottom plate and the side plate. In other examples, the reinforcement rib has a trapezoidal cross-section and is connected not only to the bottom plate and the side plate but also to the bipolar plate. In other examples, the second top plate includes a first sub-plate and a second sub-plate that are separate, and a bent plate connecting the first sub-plate and the second sub-plate. In such cases, the reinforcement rib has a trapezoidal cross-section and is connected not only to the bottom plate and the side plate, but also to the first sub-plate.

Feeding configuration for the electrolyte in the electrolyzer 100 is described in detail below.

In some embodiments, with reference to FIG. 4 and FIG. 7, an inner wall of the first frame 132 defining the internal cavity 101 has a first anode side 132a and a first cathode side 132b. The first anode side 132a defines the anode chamber 111, and the first cathode side 132b defines the cathode chamber 121. With reference to FIG. 4 and FIG. 6, an inner wall of the second frame 142 defining the internal cavity 101 is divided into a second anode side 142a and a second cathode side 142b. The second anode side 142a defines the anode chamber 111, and the second cathode side 142b defines the cathode chamber 121. One of the first anode side 132a and the second anode side 142a is provided with a first discharge port 111a at its end adjacent to the top frame 112, and the other is provided with a first feed port 111b at its end adjacent to the bottom frame 122. Similarly, one of the first cathode side 132b and the second cathode side 142b is provided with a second discharge port 121a at its end adjacent to the top frame 112, and the other is provided with a second feed port 121b at its end adjacent to the bottom frame 122.

It should be noted that, in FIG. 6, only the second anode side 142a of the second frame 142 is shown, by way of example, as being provided with the first discharge port 111a at the end adjacent to the top frame 112, and the second cathode side 142b of the second frame 142 is shown as being provided with the second feed port 121b at the end adjacent to the bottom frame 122. In FIG. 7, only the first anode side 132a of the first frame 132 is shown, by way of example, as being provided with the first feed port 111b at the end adjacent to the bottom frame 122, and the first cathode side 132b is shown as being provided with the second discharge port 121a at the end adjacent to the top frame 112.

With reference to FIG. 1, the electrolyzer 100 may further include a first feed pipe 119 and a second feed pipe 129. In combination with FIG. 6 and FIG. 7, the first feed pipe 119 (see FIG. 1) extends through one of the first frame 132 and the second frame 142 and is sealingly connected to the first feed port 111b. The second feed pipe 129 (see FIG. 1) extends through the other one of the first frame 132 and the second frame 142 and is sealingly connected to the second feed port 121b.

For the anode chamber 111, the first discharge port 111a and the first feed port 111b are arranged diagonally, which facilitates even distribution of the electrolyte across different zones within the anode chamber 111 and helps to avoid dead zones within the anode chamber 111. Similarly, with respect to the cathode chamber 121, the second discharge port 121a and the second feed port 121b are arranged diagonally, which likewise facilitates even distribution of the electrolyte across different zones within the cathode chamber 121 and helps to avoid dead zones within the cathode chamber 121.

It is worth emphasizing that the first feed pipe 119 is sealingly connected to one of the first frame 132 and the second frame 142, and does not interfere with the gas-liquid two-phase mixture entering the same frame from the second discharge port 121a. Similarly, the second feed pipe 129 is sealingly connected to the other one of the first frame 132 and the second frame 142, and does not interfere with the gas-liquid two-phase mixture entering that frame from the first discharge port 111a.

In other embodiments, with reference to FIG. 1 and FIG. 5, the bottom frame 122 has a hollow chamber whose bottom side defines the internal cavity 101, and the bottom side has a first bottom side and a second bottom side. The first bottom side defines the anode chamber 111. The second bottom side defines the cathode chamber 121. The first bottom side is provided with a first feed port 111b, and the second bottom side is provided with a second feed port (not shown in FIG. 1). The electrolyzer may further include the first feed pipe and the second feed pipe. The first feed pipe extends through the bottom frame 122 and is sealingly connected to the first feed port 111b. The second feed pipe extends through the bottom frame 122 and is sealingly connected to the second feed port. Placing both the first and second feed pipes on the bottom frame does not occupy internal space of the first frame 132 and the second frame 142, which helps ensure that the internal space of the first and second frames is fully utilized for the circulation of the gas-liquid two-phase mixture generated by the electrolyzer.

It should be noted that, in FIG. 1, both the first feed pipe 119 and the second feed pipe 129 are shown, by way of example, as extending through the bottom frame 122. In FIG. 6 and FIG. 7, the first feed pipe is shown as extending through one of the first frame 132 and the second frame 142, and the second feed pipe is shown as extending through the other of the first frame 132 and the second frame 142, by way of example.

In some cases, the electrolyzer may further include a first baffle (not shown) located within the anode chamber and fixed at a position where the bipolar plate is adjacent to the first feed pipe, and a second baffle (not shown) located within the cathode chamber and fixed at a position where the bipolar plate is adjacent to the second feed pipe. This arrangement helps to alter the flow direction of the electrolyte entering the anode chamber through the first feed pipe, promoting even flow of the electrolyte along the second direction and thus ensuring that the electrolyte within the anode chamber is evenly distributed, with smooth internal circulation and no dead zones. Similarly, the second baffle alters the flow direction of the electrolyte entering the cathode chamber through the second feed pipe, promoting even flow of the electrolyte along the second direction and thus ensuring that the electrolyte within the cathode chamber is evenly distributed, with smooth internal circulation and no dead zones.

In some cases, along the first direction, the first feed pipe protrudes from the first feed port, and the second feed pipe protrudes from the second feed port. In other words, the first feed pipe is designed to extend into the anode chamber along the first direction, and the second feed pipe is designed to extend into the cathode chamber along the first direction.

It is worth noting that when the electrolyzer is not operating, i.e., when the electrolyzer is not powered, the electrolyte in the anode chamber and the cathode chamber does not circulate, and thus impurities in the electrolyte generally settle at the bottom frame. In view of this, the design of the first feed pipe extending into the anode chamber along the first direction and the second feed pipe extending into the cathode chamber along the first direction helps to block the backflow of impurities in the electrolyte into the first and second feed pipes, utilizing the portions of the respective feed pipes that protrude out of the bottom frame. This ensures that the first and second feed pipes remain unobstructed, preventing them from being clogged by impurities in the electrolyte, thereby extending the service life of the first and second feed pipes.

In some embodiments, with reference to FIG. 1 to FIG. 8, the bipolar plate 103 may be made of stainless steel, and the frame 102 may be welded from four hollow stainless steel pipes.

In some embodiments, the bipolar plate 103 may have a flatness deviation of less than 0.2 mm within an area on 500 mm * 500 mm.

In some embodiments, in the third direction Z, the bipolar plate 103 may be centrally positioned on the frame 102.

In some embodiments, with reference to FIG. 1, the electrolyzer 100 may further include two welding lugs 179 that are opposite in the second direction Y. One of the two welding lugs 179 is fixed to the first frame 132, and the other is fixed to the second frame 142. The two welding lugs 179 helps place the electrolyzer 100 on a frame rail.

In some embodiments, with reference to FIG. 2, FIG. 4, and FIG. 5, the electrolyzer 100 may further include at least two first ribs 139 arranged at intervals along the second direction Y, with the first ribs 139 positioned at least on the first side 103a of the bipolar plate 103; and at least two second ribs 149 arranged at intervals along the second direction Y, with the second ribs 149 positioned at least on the second side 103b of the bipolar plate 103. It should be noted that the first ribs 139 direct the flow of the electrolyte within the anode chamber 111, facilitating even distribution of the electrolyte within the anode chamber 111. The first ribs 139 also provide support for the anode mesh 105, preventing the relatively flexible anode mesh 105 from collapsing within the gap between adjacent first ribs 139. Similarly, the second ribs 149 direct the flow of the electrolyte within the cathode chamber 121, facilitating even distribution of the electrolyte within the cathode chamber 121. The second ribs 149 also provide support for the cathode mesh 107, preventing the relatively flexible cathode mesh 107 from collapsing within the gap between adjacent second ribs 149.

In some cases, with reference to FIG. 4 and FIG. 5, the first rib 139 extends from the position where the bipolar plate 103 is not covered by the first collection frame 104 to the side of the first collection frame 104 that is away from the bipolar plate 103. At least two second ribs 149, arranged at intervals along the second direction Y, extend from the position where the bipolar plate 103 is not covered by the first collection frame 104 to the side of the first collection frame 104 that is away from the bipolar plate 103.

In some cases, with reference to FIG. 4, the first rib 139 and the second rib 149 are each provided with multiple flow diversion holes 189, which are used to disturb the flow of the electrolyte within the electrolyzer 100, creating multiple flow paths for the electrolyte within the anode chamber 111 and the cathode chamber 121. This helps to further ensure the even distribution of the electrolyte within the electrolyzer 100. It should be noted that in the embodiments of the present application, no other restrictions are placed on the size or the number of flow diversion holes 189 on the first rib 139 and the second rib 149.

In some embodiments, with reference to FIG. 4, the electrolyzer 100 may further include: a support bottom mesh 159, positioned at one end of the second rib 149, away from the bipolar plate 103, with a first top end of the support bottom mesh 159 protruding from the second top end of the second rib 149 and a first bottom end of the support bottom mesh 159 protruding from the second bottom end of the second rib 149 along the first direction X; an elastic structure 169, positioned on the side of the support bottom mesh 159 away from the second rib 149, with the cathode mesh 107 positioned on the side of the elastic structure 169, away from the support bottom mesh 159, and the support bottom mesh 159 and the elastic structure 169 being hooked at the first top end and the first bottom end.

It should be noted that, on the one hand, the provision of the support bottom mesh 159 and the elastic structure 169 allows the cathode mesh 107 to elastically contact the second collection frame 106 and the second rib 149. This helps to increase the elastic volume of the cathode mesh 107. Further, the cathode mesh 107 is contacted with the elastic structure 169 at various positions that are spaced out, resulting in an even distribution of the force exerted by the elastic structure 169 onto the cathode mesh 107 at different positions. This prevents damage to the separator caused by pressure differences in the electrolyte, thus enhancing the durability of the electrolyzer 100. Additionally, this arrangement keeps the distance between the cathode mesh 107 and the anode mesh 105 minimal, reducing the resistance between the cathode mesh 107 and the anode mesh 105. On the other hand, the support bottom mesh 159 and the elastic structure 169 provide a larger electrolysis area for the electrolyte, further increasing the electrolysis area of the electrolyzer 100. Furthermore, the support bottom mesh 159 contributes to providing good support for both the elastic structure 169 and the cathode mesh 107, preventing the flexible elastic structure 169 and the flexible cathode mesh 107 from collapsing between adjacent second ribs 149, thus enhancing the structural stability of the electrolyzer 100.

In some embodiments, with reference to FIG. 1, FIG. 6, and FIG. 7, the electrolyzer 100 may further include a first discharge pipe 118 and a second discharge pipe 128. The first discharge pipe 118 communicates with the first discharge port 111a via one of the first frame 132 and the second frame 142, which serves as a collection device for the gas-liquid two-phase mixture generated within the anode chamber 111. The first discharge pipe 118 is used to discharge the gas-liquid two-phase mixture collected from the anode chamber 111. The second discharge pipe 128 communicates with the second discharge port 121a via the other of the first frame 132 and the second frame 142, which serves as a collection device for the gas-liquid two-phase mixture generated within the cathode chamber 121. The second discharge pipe 128 is used to discharge the gas-liquid two-phase mixture collected from the cathode chamber 121.

In summary, on one hand, the anode mesh 105 is positioned on the side of the first collection frame 104 away from the bipolar plate 103, which helps to increase the reaction area of the electrolyte within the anode chamber 111 without increasing the volume of the anode chamber 111, i.e., increasing the electrolysis area within the anode chamber 111, thereby enhancing the current density and electrolysis efficiency in the anode chamber 111. On the other hand, the cathode mesh 107 is positioned on the side of the second collection frame 106 away from the bipolar plate 103, which helps to increase the reaction area of the electrolyte within the cathode chamber 121 without increasing the volume of the cathode chamber 121, i.e., increasing the electrolysis area within the cathode chamber 121, thereby enhancing the current density and electrolysis efficiency in the cathode chamber 121. These two effects help to improve the electrolysis efficiency of the electrolyzer 100 within the limited physical space of the electrolyzer 100. Furthermore, one of the first frame 132 and the second frame 142 serves as the collection device for the gas-liquid two-phase mixture generated in the anode chamber 111 and the other serves as the collection device for the gas-liquid two-phase mixture generated in the cathode chamber 121, this helps to fully utilize the physical space occupied by the first frame 132 and the second frame 142, thereby increasing the integration density of the electrolyzer 100, without adding separate collection devices. This also contributes to reducing the manufacturing cost of the electrolyzer 100. Moreover, the first discharge port 111a and the second discharge port 121a are positioned adjacent to the top frame 112, which helps to improve the gas and liquid discharge efficiency. The design of the first collection frame 104 and the second collection frame 106 further helps to avoid significant backflow of the electrolyte.

A method for manufacturing an electrolyzer is further provided according to another embodiment of the present application, for preparing the electrolyzer described in the previous embodiments. The method for manufacturing the electrolyzer will be described in detail below with reference to the accompanying drawings. It should be noted that the parts that are the same as or correspond to those in the previous embodiments will not be repeated here.

With reference to FIGS. 1 to 8, the method for manufacturing the electrolyzer includes at least the following operations: providing a frame 102 that defines an internal cavity, where the frame 102 includes a top frame 112 and a bottom frame 122 that are opposite to each other along a first direction X, as well as a first frame 132 and a second frame 142 that are opposite to each other along a second direction Y; providing a bipolar plate 103, and welding four edges of the bipolar plate 103 to the top frame 112, the first frame 132, the bottom frame 122, and the second frame 142, respectively, where the bipolar plate 103 divides the internal cavity 101 into an anode chamber 111 and a cathode chamber 121 along a third direction Z, and the bipolar plate 103 includes a first side 103a that defines the anode chamber 111 and a second side 103b that defines the cathode chamber 121; providing a first collection frame 104, and fixing the first collection frame 104 to one end, which is close to the top frame 112, of the first side 103a, with the first collection frame 104 and the bipolar plate 103 defining a first cavity 114; providing a second collection frame 106, and fixing the second collection frame 106 to one end, which is close to the top frame 112, of the second side 103b, with the second collection frame 106 and the bipolar plate 103 defining a second cavity 116; providing an anode mesh 105, and placing the anode mesh 105 on a side of the first collection frame 104 that is away from the bipolar plate 103; providing a cathode mesh 107, and placing the cathode mesh 107 on a side of the second collection frame 106 that is away from the bipolar plate 103. The first frame 132 and the second frame 142 each have a hollow chamber. One of the first frame 132 and the second frame 142 defines a first discharge port 111a on its inner wall facing the anode chamber 111, and the other defines a second discharge port 121a on its inner wall facing the cathode chamber 121. The first discharge port 111a communicates with the first cavity 114, and the second discharge port 121a communicates with the second cavity 116.

It is worth noting that the four edges of the bipolar plate 103 are respectively welded to the top frame 112, the first frame 132, the bottom frame 122, and the second frame 142, thereby dividing the internal cavity 101 into the anode chamber 111 and the cathode chamber 121 along the third direction Z. In other words, the frame 102 and the bipolar plate 103 are welded together as a single unit. This simplifies the installation process of the bipolar plate 103, streamlines the manufacturing process for both the frame 102 and the bipolar plate 103, and facilitates subsequent operation and maintenance of the frame 102 and the bipolar plate 103. For example, the electrolyzer 100 can be quickly shut down for disassembly and maintenance.

The following provides a detailed description of each operation in the method for manufacturing the electrolyzer.

In some embodiments, with reference to FIGS. 1 and 2, the operation of fixing the first collection frame 104 to one end, which is close to the top frame 112, of the first side 103a includes: welding the first collection frame 104 to the end, which is close to the top frame 112, of the first side 103a. In this way, the installation process of the first collection frame 104 is simple, which helps simplify the manufacturing process of installing the first collection frame 104 onto the bipolar plate 103 and facilitates subsequent operation and maintenance of the first collection frame 104.

In some embodiments, with reference to FIGS. 1 and 2, the operation of fixing the second collection frame 106 to one end, which is close to the top frame 112, of the second side 103b includes: welding the second collection frame 106 to the end, which is close to the top frame 112, of the second side 103b. In this way, the installation process of the second collection frame 106 is simple, which helps simplify the manufacturing process of installing the second collection frame 106 onto the bipolar plate 103 and facilitates subsequent operation and maintenance of the second collection frame 106.

It should be noted that, in some cases, both the first collection frame 104 and the second collection frame 106 can be welded onto the bipolar plate 103. In practical applications, depending on specific requirements, it is also possible for only one of the first collection frame and the second collection frame to be welded to the bipolar plate, while the other is riveted to the bipolar plate or fixed to the bipolar plate by other fastening methods. Alternatively, both the first collection frame and the second collection frame are riveted to the bipolar plate or fixed to the bipolar plate by other fastening methods.

In some embodiments, with reference to FIGS. 2, 4, and 5, the method further includes: providing at least two first ribs 139, welding the first ribs 139 to the first side 103a of the bipolar plate 103, with the at least two first ribs 139 arranged at intervals along the second direction; providing at least two second ribs 149, welding the second ribs 149 to the second side 103b of the bipolar plate 103, with the at least two second ribs 149 arranged at intervals along the second direction Y. In this way, the installation process of the first ribs 139 and second ribs 149 is simple, which helps simplify the manufacturing process of installing the first ribs 139 and second ribs 149 onto the bipolar plate 103 and facilitates subsequent operation and maintenance of the first ribs 139 and second ribs 149.

In some embodiments, with reference to FIG. 4, the operation of placing the anode mesh 105 on the side, that is away from the bipolar plate 103, of the first collection frame 104 includes: welding the anode mesh 105 to one end, that is away from the bipolar plate 103, of the first rib 139. In this way, the installation process of the anode mesh 105 is simple, which helps simplify the manufacturing process of installing the anode mesh 105 onto the bipolar plate 103 and facilitates subsequent operation and maintenance of the anode mesh 105.

In some embodiments, with reference to FIG. 4, the operation of placing the cathode mesh 107 on a side, that is away from the bipolar plate 103, of the second collection frame 106 includes: providing a support bottom mesh 159, welding the support bottom mesh 159 to an end of the second rib 149 that is away from the bipolar plate 103, with a first top end of the support bottom mesh 159 protruding from a second top end of the second rib 149 and a first bottom end of the support bottom mesh 159 protruding from the second bottom end of the second rib 149 along the first direction X; placing an elastic structure169 on a side of the support bottom mesh 159 that is away from the second rib 149; placing the cathode mesh 107 on the side of the elastic structure169 that is away from the support bottom mesh 159; and hooking the support bottom mesh 159 and the elastic structure 169 at the first top end and the first bottom end.

It is worth noting that there is no need to individually fix the support bottom mesh 159, the elastic structure169, and the cathode mesh 107. Instead, the elastic structure169 can simply be placed between the support bottom mesh 159 and the cathode mesh 107, which reduces the number of operations for assembling the support bottom mesh 159, the elastic structure169, and the cathode mesh 107, improves assembly efficiency, and also facilitates subsequent operation and maintenance of the cathode mesh 107.

In summary, the relative positional relationships between the components such as the frame 102, the bipolar plate 103, the first collection frame 104, the anode mesh 105, the second collection frame 106, and the cathode mesh 107, as designed in the embodiments of the electrolyzer 100 of the present application, are beneficial for simplifying the relative fixation between these components and also facilitate subsequent operation and maintenance of the electrolyzer 100.

An electrolyzer module is also provided according to embodiments of the present application. The electrolyzer module includes multiple electrolyzers as provided in the previous embodiments or multiple electrolyzers manufactured by the method in the previous embodiments. The electrolyzer module in the embodiments of the present application will be described in detail below with reference to the accompanying drawings. It should be noted that the parts that are the same as or correspond to those in the previous embodiments will not be repeated here.

With reference to FIGS. 1 to 8, the electrolyzer module includes multiple electrolyzers 100 as provided in the foregoing embodiments or multiple electrolyzers 10 manufactured by the method described in the foregoing embodiments, an electrolysis bath, and a power supply unit. The electrolysis bath contains an electrolyte, in which the cathode mesh 107 and the anode mesh 105 of the electrolyzer 100 are immersed. The power supply unit is electrically connected to the cathode mesh 107 and the anode mesh 105 and is configured to supply electrical power to the electrolyzers 100.

In some embodiments, multiple electrolyzers 100 are arranged in parallel within the electrolysis bath, and the power supply unit is electrically connected to the electrolyzers 100 via wires. Since the separator inside each individual electrolyzer 100 is elastically fitted between the support bottom mesh 159 and the elastic structure169, the separator is not prone to damage caused by pressure differences in the electrolyte. This helps ensure the good durability of the electrolyzer module.

It will be understood by those skilled in the art that the foregoing embodiments are merely specific implementations of the present application. In practical applications, various changes may be made in form and detail without departing from scope of the embodiments of the present application. Any modifications and alterations made by those skilled in the art without departing from scope of the embodiments of the present application shall fall within the scope of protection as defined by the claims.

## Claims

1. An electrolyzer (100), **characterized by** comprising:
a frame (102) defining an inner cavity (101), the frame (102) comprising a top frame (112) and a bottom frame (122) opposite to each other in a first direction (X), and a first frame (132) and a second frame (142) opposite to each other in a second direction (Y);
a bipolar plate (103) connected to the frame (102), the bipolar plate (103) dividing the inner cavity (101) into an anode chamber (111) and a cathode chamber (121) in a third direction (Z);
a first collection frame (104), located within the anode chamber (111) and fixed to an end of the bipolar plate (103) adjacent to the top frame (112), and the first collection frame (104) and the bipolar plate (103) defining a first cavity (114);
an anode mesh (105), located on a side of the first collection frame (104) away from the bipolar plate (103);
a second collection frame (106), located within the cathode chamber (121) and fixed to the end of the bipolar plate (103) adjacent to the top frame (112), and the second collection frame (106) and the bipolar plate (103) defining a second cavity (116); and
a cathode mesh (107), located on a side of the second collection frame (106) away from the bipolar plate (103), wherein each of the first frame (132) and the second frame (142) has a hollow chamber, and one of the first frame (132) and the second frame (142) has a first discharge port (111a) formed on an inner wall facing the anode chamber (111), and the other of the first frame (132) and the second frame (142) has a second discharge port (121a) formed on an inner wall facing the cathode chamber (121), the first discharge port (111a) being in communication with the first cavity (114), and the second discharge port (121a) being in communication with the second cavity (116).

2. The electrolyzer (100) according to claim 1, wherein at least one of the first collection frame (104) and the second collection frame (106) comprises a top plate and a bottom plate opposite to each other in the first direction (X), and a side plate connecting ends of the top plate and the bottom plate that are away from the bipolar plate (103), and the top plate is provided with a reflux hole (110); and/or
at least one of the first collection frame (104) and the second collection frame (106) comprises a bottom plate and a side plate located on a side of the bottom plate adjacent to the top frame (112), the bottom plate, the side plate, and the bipolar plate (103) together defining a cavity having an opening facing the top frame (112).

3. The electrolyzer (100) according to claim 2, wherein the reflux hole (110) has an opening that is circular, elliptical, triangular, square, rhombic, or an N-sided polygon, wherein N is a positive integer greater than or equal to 5.

4. The electrolyzer (100) according to claim 1, wherein there is spacing between the first collection frame (104) and the top frame (112), and there is spacing between the second collection frame (106) and the top frame (112);
in the first direction (X), a minimum distance between the first collection frame (104) and the top frame (112) is a first distance, a minimum distance between the first discharge port (111a) and the top frame (112) is a second distance, and the first distance is less than the second distance; and/or
in the first direction (X), a minimum distance between the second collection frame (106) and the top frame (112) is a third distance, a minimum distance between the second discharge port (121a) and the top frame (112) is a fourth distance, and the third distance is less than the fourth distance.

5. The electrolyzer (100) according to claim 1, wherein at least one of the first collection frame (104) and the second collection frame (106) comprises a top plate and a bottom plate opposite to each other in the first direction (X), and a side plate connecting ends of the top plate and the bottom plate that are away from the bipolar plate (103),
wherein the electrolyzer (100) further comprises a reinforcing rib located in at least one of the first cavity (114) and the second cavity (116) and connected to at least the bottom plate and the side plate.

6. The electrolyzer (100) according to claim 1, wherein an inner wall of the first frame (132) defining the inner cavity (101) has a first anode side (132a) and a first cathode side (132b), the first anode side (132a) defines the anode chamber (111), and the first cathode side (132b) defines the cathode chamber (121); and an inner wall of the second frame (142) defining the inner cavity (101) is divided into a second anode side (142a) and a second cathode side (142b), the second anode side (142a) defines the anode chamber (111), and the second cathode side (142b) defines the cathode chamber (121);
one of the first anode side (132a) and the second anode side (142a) has the first discharge port (111a) formed at an end adjacent to the top frame (112), and the other of the first anode side (132a) and the second anode side (142a) has a first feed port (111b) formed at an end adjacent to the bottom frame (122);
one of the first cathode side (132b) and the second cathode side (142b) has the second discharge port (121a) formed at an end portion adjacent to the top frame (112), and the other of the first cathode side (132b) and the second cathode side (142b) has a second feed port (121b) formed at an end adjacent to the bottom frame (122);
wherein the electrolyzer (100) further comprises: a first feed pipe (119) and a second feed pipe (129), the first feed pipe (119) extending through one of the first frame (132) and the second frame (142) to be sealingly connected to the first feed port (111b), and the second feed pipe (129) extending through the other of the first frame (132) and the second frame (142) to be sealingly connected to the second feed port (121b).

7. The electrolyzer (100) according to claim 1, wherein the bottom frame (122) has a hollow chamber, and a bottom side of the bottom frame (122) that defines the inner cavity (101) has a first bottom side and a second bottom side, the first bottom side defines the anode chamber (111), and the second bottom side defines the cathode chamber (121), the first bottom side having a first feed port (111b), and the second bottom side having a second feed port (121b);
wherein the electrolyzer (100) further comprises: a first feed pipe (119) and a second feed pipe (129), the first feed (119) pipe extending through the bottom frame (122) to be sealingly connected to the first feed port (111b), and the second feed pipe (129) extending through the bottom frame (122) to be sealingly connected to the second feed port (121b).

8. The electrolyzer (100) according to claim 7, further comprising:
a first baffle located within the anode chamber (111), fixed at a position where the bipolar plate (103) is adjacent to the first feed pipe (119); and
a second baffle located within the cathode chamber (121), fixed at a position where the bipolar plate (103) is adjacent to the second feed pipe (129).

9. The electrolyzer (100) according to claim 8, wherein in the first direction (X), the first feed pipe (119) protrudes from the first feed port (111b), and the second feed pipe (129) protrudes from the second feed port (121b).

10. A method for manufacturing an electrolyzer (100), **characterized by** comprising:
providing a frame (102) defining an inner cavity (101), the frame (102) comprising a top frame (112) and a bottom frame (122) opposite to each other in a first direction (X), and a first frame (132) and a second frame (142) opposite to each other in a second direction (Y);
providing a bipolar plate (103), welding four sides of the bipolar plate (103) to the top frame (112), the first frame (132), the bottom frame (122), and the second frame (142), respectively, to divide the inner cavity (101) into an anode chamber (111) and a cathode chamber (121) in a third direction (Z), and the bipolar plate (103) comprising a first side defining the anode chamber (111) and a second side defining the cathode chamber (121);
providing a first collection frame (104), fixing the first collection frame (104) to an end of the first side adjacent to the top frame (112), and the first collection frame (104) and the bipolar plate (103) defining a first cavity (114);
providing a second collection frame (106), fixing the second collection frame (106) to an end of the second side adjacent to the top frame (112), and the second collection frame (106) and the bipolar plate (103) defining a second cavity (116);
providing an anode mesh (105), arranging the anode mesh (105) on a side of the first collection frame (104) away from the bipolar plate (103); and
providing a cathode mesh (107), arranging the cathode mesh (107) on a side of the second collection frame (106) away from the bipolar plate (103);
wherein each of the first frame (132) and the second frame (142) has a hollow chamber, and one of the first frame (132) and the second frame (142) has a first discharge port (111a) formed on an inner wall facing the anode chamber (111), and the other of the first frame (132) and the second frame (142) has a second discharge port (121a) formed on an inner wall facing the cathode chamber (121), the first discharge port (111a) being in communication with the first cavity (114), and the second discharge port (121a) being in communication with the second cavity (116).

11. The method according to claim 10, wherein fixing the first collection frame (104) to an end of the first side adjacent to the top frame (112), comprises: welding the first collection frame (104) to the end of the first side adjacent to the top frame (112); and/or,
fixing the second collection frame (106) to an end of the second side adjacent to the top frame (112), comprises: welding the second collection frame (106) to the end of the second side adjacent to the top frame (112).

12. The method according to claim 10, further comprising:
providing at least two first ribs, welding the at least two first ribs to the first side of the bipolar plate (103), and arranging the at least two first ribs spaced apart along the second direction (Y);
providing at least two second ribs, welding the second ribs to the second side of the bipolar plate (103), and arranging the at least two second ribs spaced apart along the second direction (Y).

13. The method according to claim 12, wherein arranging the anode mesh (105) on a side of the first collection frame (104) away from the bipolar plate (103), comprises: welding the anode mesh (105) to ends of the at least two first ribs away from the bipolar plate (103); and/or,
arranging the cathode mesh (107) on a side of the second collection frame (106) away from the bipolar plate (103), comprises:
providing a support bottom mesh, welding the support bottom mesh to ends of the at least two second ribs away from the bipolar plate (103), wherein in the first direction (X), a first top end of the support bottom mesh protrudes from second top ends of the second ribs, and a first bottom end of the support bottom mesh protrudes from second bottom ends of the second ribs;
arranging an elastic structure on a side of the support bottom mesh away from the at least two second ribs;
arranging the cathode mesh (107) on a side of the elastic structure away from the support bottom mesh; and
hooking the support bottom mesh and the elastic structure at the first top end and the first bottom end.

14. An electrolyzer module, comprising:
a plurality of electrolyzers (100) according to any one of claims 1 to 9, or a plurality of electrolyzers (100) manufactured by the method according to any one of claims 10 to 13;
an electrolysis bath; and
a power supply unit, wherein the electrolysis bath includes an electrolyte, the cathode mesh (107) and the anode mesh (105) in each of the plurality of electrolyzers (100) are immersed in the electrolyte, and the power supply unit is electrically connected to the cathode mesh (107) and the anode mesh (105) and is configured to supply electrical power to the plurality of electrolyzers (100).
